# EUROPÄISCHE PATENTSCHRIFT

(11) **EP 3 801 427 B1**
(45) Veröffentlichungstag und Bekanntmachung des Hinweises auf die Patenterteilung: **11.05.2022**
(21) Anmeldenummer: 19740596.2
(22) Anmeldetag: 23.07.2019
(51) Int. Cl.: A61G 5/04, A61G 5/10, A61G 5/06, B62K 11/00

(54) **SELBSTBALANCIERENDES FAHRZEUG**
SELF-BALANCING VEHICLE
VÉHICULE GYROPODE

(30) Priorität: 27.07.2018 EP 18186049
(43) Veröffentlichungstag der Anmeldung: 14.04.2021
(73) Patentinhaber: Scewo AG, 8406 Winterthur (CH)
(72) Erfinder: GEMPERLE, Thomas, 8400 Winterthur (CH)
(74) Vertreter: Dr. Gassner & Partner mbB
(86) Internationale Anmeldenummer: PCT/EP2019/069788
(87) Internationale Veröffentlichungsnummer: WO 2020/020880

(56) Entgegenhaltungen:
- WO-A1-94/07452
- WO-A1-2010/109466
- DE-A1-102007 061 708

## Beschreibung

Die Erfindung betrifft ein selbstbalancierendes Fahrzeug, umfassend zwei axial voneinander beanstandete, an einem Grundkörper angebrachte Räder, einen mit wenigstens einem Rad gekoppelten elektrischen Antrieb, eine Steuerungseinrichtung, die dazu ausgebildet ist, durch Ansteuern des Antriebs das Fahrzeug im Gleichgewicht zu halten, indem das Fahrzeug lediglich von den beiden voneinander beabstandeten Rädern getragen und somit balanciert ist, und eine Aufnahme zum Tragen und Befördern einer Last.

Das Dokument DE 10 2007 061708 A1 beschreibt ein als Rollstuhl ausgebildetes selbstbalancierendes Fahrzeug. Der für den Benutzer vorgesehene Sitz ist durch eine Vertikalhubeinrichtung höhenverstellbar.

Aus dem Dokument WO 2010/109466 A1 ist ein herkömmlicher Rollstuhl bekannt, der eine Sitzkomponente und eine Fahrgestellkomponente umfasst, die über eine verstellbare Kupplung miteinander verbunden sind, die um eine Achse geschwenkt werden kann. Die Kupplung ermöglicht ein Verschwenken der Sitzkomponente relativ zur Fahrgestellkomponente. Durch die Verstellung des Rollstuhls kann dieser optimal an unterschiedliche Situationen angepasst werden, beispielsweise zum Befahren einer Treppe.

In der WO 94/07452 A1 wird eine Transportvorrichtung vorgeschlagen, die das Besteigen von Treppen ermöglicht. Die Transportvorrichtung umfasst sowohl Räder als auch ein Raupenfahrwerk.

Es sind selbstbalancierende Fahrzeuge bekannt, die entweder einen feststehenden, nicht höhenverstellbaren Sitz oder einen in vertikaler Richtung verstellbaren Sitz aufweisen. Eine Anpassung der Sitzhöhe ist vorteilhaft, wenn der Benutzer von einer anderen Sitzfläche auf das Fahrzeug umsteigt oder das Fahrzeug verlässt. Durch das Absenken des Sitzes wird ermöglicht, dass der Benutzer mit dem Fahrzeug soweit an einen Tisch heranfahren kann, dass sich seine Beine unterhalb einer Tischplatte befinden. In anderen Situationen ist eine erhöhte Sitzposition vorteilhaft, beispielsweise wenn der Benutzer auf Augenhöhe mit anderen stehenden Personen kommunizieren möchte.

Der Erfindung liegt die Aufgabe zugrunde, ein selbstbalancierendes Fahrzeug anzugeben, das eine komfortable Sitzverstellung ermöglicht. Die Erfindung ist in Anspruch 1 definiert.

Zur Lösung dieser Aufgabe ist bei einem selbstbalancierenden Fahrzeug der eingangs genannten Art erfindungsgemäß vorgesehen, dass es einen Verstellmechanismus zum linearen Verschieben der Aufnahme aufweist, der fest mit dem Grundkörper verbunden und so angeordnet ist, dass die Aufnahme durch die lineare Verschiebung sowohl entlang der Längsachse als auch entlang der Hochachse des Fahrzeugs verstellbar ist, indem das vordere Ende des Verstellmechanismus bezüglich der horizontalen, in Querrichtung des selbstbalancierenden Fahrzeugs verlaufenden Achse nach unten geneigt ist.

Durch die Erfindung ergibt sich der Vorteil, dass der Sitz aufgrund der zur horizontalen Achse geneigten Achse gleichzeitig horizontal und vertikal verstellbar ist. Somit benötigt der Verstellmechanismus lediglich einen einzigen Antrieb.

Bei dem erfindungsgemäßen Fahrzeug wird es bevorzugt, dass der Verstellmechanismus einen Linearantrieb aufweist. Der Linearantrieb kann beispielsweise als Spindeltrieb ausgebildet sein. Ein derartiger Linearantrieb ist besonders platzsparend.

Mit besonderem Vorteil kann es bei dem erfindungsgemäßen Fahrzeug vorgesehen sein, dass der Verstellmechanismus stufenlos verstellbar ist. Die stufenlose Verstellung ermöglicht einen besonders einfachen Transfer eines Benutzers auf das Fahrzeug und von dem Fahrzeug.

Es liegt auch im Rahmen der Erfindung, dass der Verstellmechanismus einen Teleskopauszug aufweist, der einerseits an dem Grundkörper und andererseits an dem Sitz angebracht ist. Wenn der Linearantrieb des Verstellmechanismus aktiviert wird, wird der bewegbare Teil des Teleskopauszugs verschoben, wodurch der Sitz in der gewünschten Weise angehoben bzw. abgesenkt und nach vorne bzw. nach hinten bewegt wird.

Vorzugsweise weist der Teleskopauszug des erfindungsgemäßen Rollstuhls eine linke und eine rechte ausziehbare Teleskopschiene auf, die durch eine Verbindungsplatte miteinander verbunden sind. Wenn der Linearantrieb des Verstellmechanismus aktiviert wird, werden die beiden Teleskopschienen gleichzeitig und parallel aus- und eingefahren. Dementsprechend wird der mit dem beweglichen Teil des Teleskopauszugs verbundene Sitz in der gewünschten Richtung bewegt und angehoben oder abgesenkt.

Eine Ausführung des erfindungsgemäßen Fahrzeugs sieht vor, dass es zum Befahren einer Treppe oder einer Rampe geeignet ist und in einer ersten, im Wesentlichen für einen ebenen Untergrund vorgesehenen Betriebsart durch die an dem Grundkörper angebrachten Räder und in einer zweiten, zum Befahren einer Treppe oder einer Rampe vorgesehenen Betriebsart mittels eines ein Umschlingungsmittel aufweisenden Raupen- oder Kettenfahrwerks antreibbar ist. In der ersten Betriebsart wird das Fahrzeug durch die beiden voneinander beanstandeten Räder angetrieben, die mit einem elektrischen Antrieb gekoppelt sind. Das Raupen- oder Kettenfahrwerk kann dazu in eine erhöhte Position bewegt werden. In der zweiten, zum Befahren einer Treppe oder einer Rampe vorgesehenen Betriebsart wird das Raupen- oder Kettenfahrwerk durch einen elektrischen Antrieb angetrieben. Die beiden Räder befinden sich dabei in einer erhöhten Position.

Bei dem erfindungsgemäßen Fahrzeug wird es besonders bevorzugt, dass die Aufnahme als Sitz ausgebildet ist, an dem eine mit dem Sitz verstellbare Fußstütze angeordnet ist. Die Fußstütze ist fest mit dem Sitz verbunden und somit gemeinsam mit dem Sitz verstellbar.

Besonders bevorzugt wird eine Ausführung des erfindungsgemäßen Fahrzeugs, bei der der Sitz so weit nach vorne verstellbar ist, dass sich die Fußstütze vor einem oder dem Raupen- oder Kettenfahrwerk befindet.

Das erfindungsgemäße Fahrzeug kann insbesondere als Rollstuhl ausgebildet sein.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: ein Ausführungsbeispiel eines als Rollstuhl ausgebildeten erfindungsgemäßen Fahrzeugs in einer perspektivischen Ansicht,
- Fig. 2: den Rollstuhl von Fig. 1 in einer Seitenansicht,
- Fig. 3: den Rollstuhl von Fig. 1 nach dem Verstellen des Sitzes in eine untere und nach vorne verschobene Position,
- Fig. 4: den Rollstuhl von Fig. 3 in einer Seitenansicht,
- Fig. 5: den Grundkörper des Rollstuhls mit Rädern und einem Raupenfahrwerk,
- Fig. 6: den Verstellmechanismus des als Rollstuhl ausgebildeten erfindungsgemäßen Fahrzeugs,
- Fig. 7: eine schematische Darstellung des Verstellvorgangs in einer Seitenansicht,
- Fig. 8: einen Schnitt entlang der Linie VIII-VIII von Fig. 7, und
- Fig. 9: eine ähnliche Darstellung wie Fig. 7 mit abgesenktem Sitz.

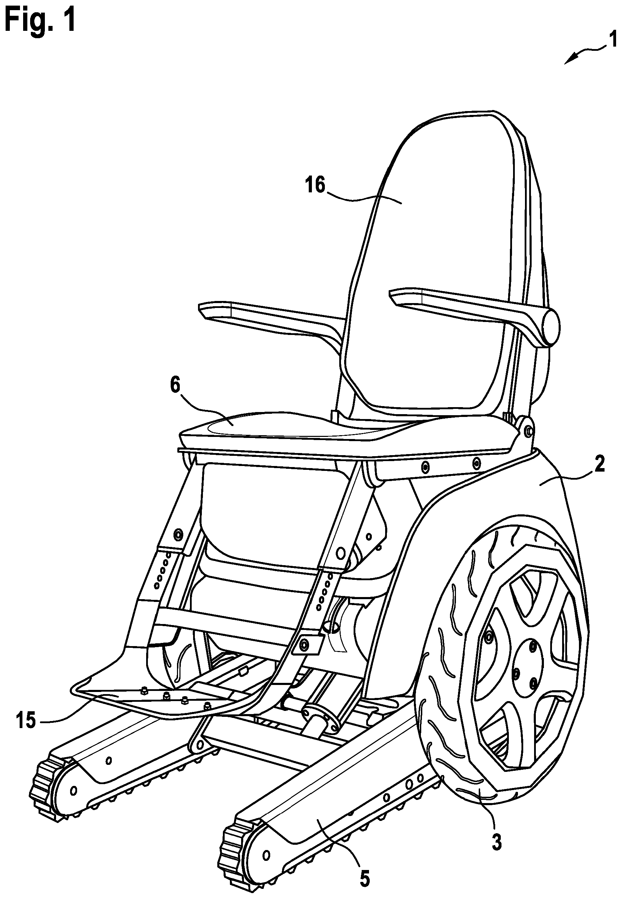

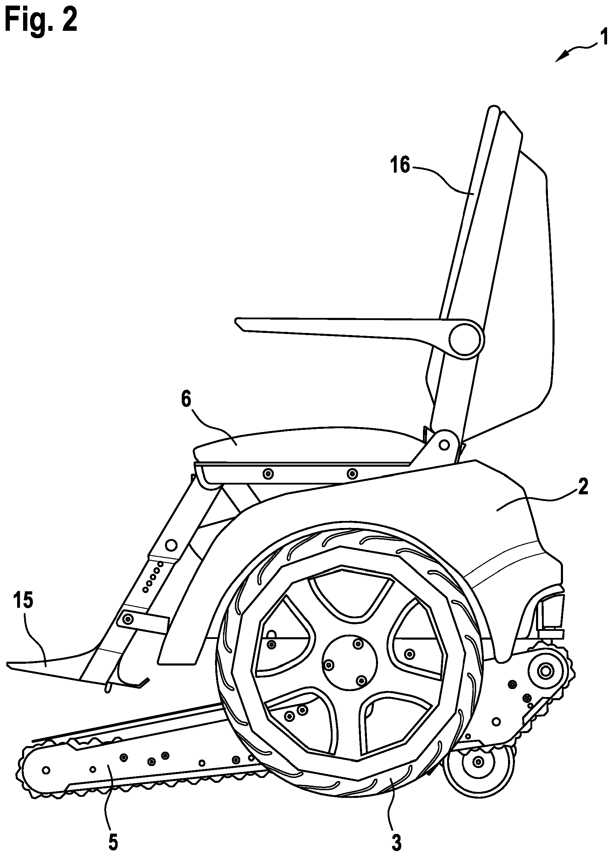

Der in den Fig. 1 bis 4 gezeigte Rollstuhl 1 umfasst einen Grundkörper 2, der an beiden Seiten mit Rädern 3, 4 versehen ist. Der Rollstuhl 1 weist einen nicht näher dargestellten elektrischen Antrieb auf, durch den die Räder 3, 4 antreibbar sind. Die Räder 3, 4 dienen zum Fahren auf einem im Wesentlichen ebenen Untergrund. Fig. 1 ist eine perspektivische Ansicht, Fig. 2 ist eine Seitenansicht.

Zusätzlich weist der Rollstuhl 1 ein Raupenfahrwerk 5 auf, das ein Umschlingungsmittel umfasst. Mittels des Raupenfahrwerks 5 ist der Rollstuhl 1 in der Lage, eine Treppe oder eine Rampe zu befahren. In dieser zweiten Betriebsart befinden sich die Räder 3, 4 in einer erhöhten Position. In der ersten Betriebsart, wenn der Rollstuhl 1 hingegen mittels der Räder 3, 4 bewegt wird, befindet sich das Raupenfahrwerk 5 in einer erhöhten Position. Mittels einer Steuerungseinrichtung (nicht gezeigt) kann der Antrieb so angesteuert werden, dass der den Benutzer tragende Rollstuhl lediglich von den Rädern 3, 4 getragen und somit balanciert wird. Dementsprechend ist der Rollstuhl 1 als selbstbalancierendes Fahrzeug ausgebildet.

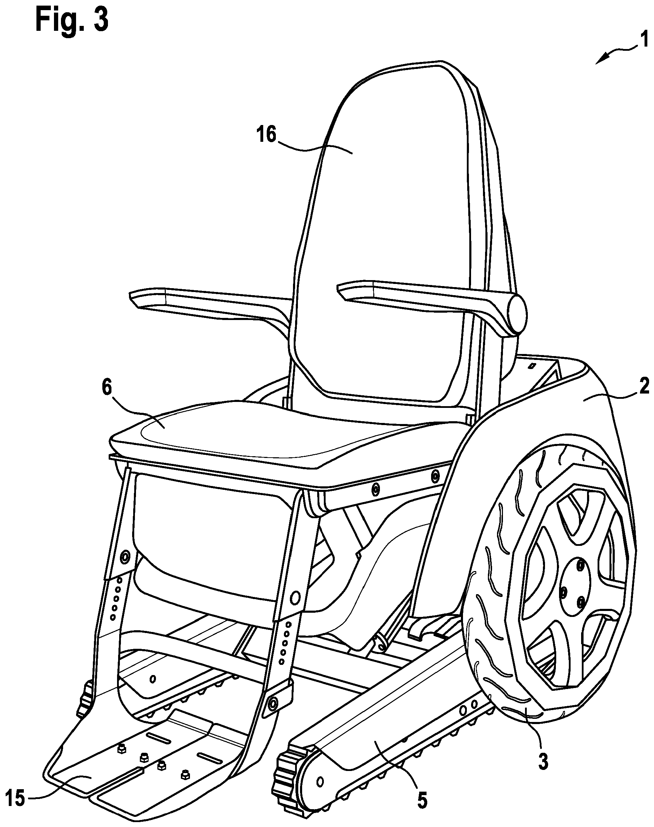

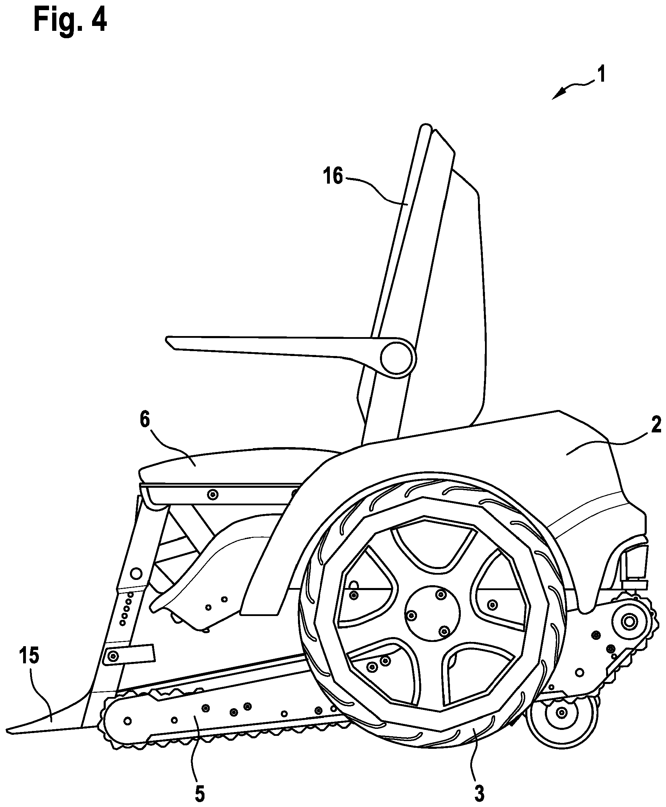

Der Rollstuhl 1 umfasst eine als Sitz 6 ausgebildete Aufnahme. Der Sitz 6 ist in Fig. 1 und Fig. 2 in einer erhöhten und in Fig. 3 und Fig. 4 in einer abgesenkten Position dargestellt. Der Rollstuhl 1 weist einen Verstellmechanismus auf, der dazu ausgebildet ist, den Sitz 6 durch eine lineare Verschiebung entlang einer zur horizontalen Achse geneigten Achse zu verstellen.

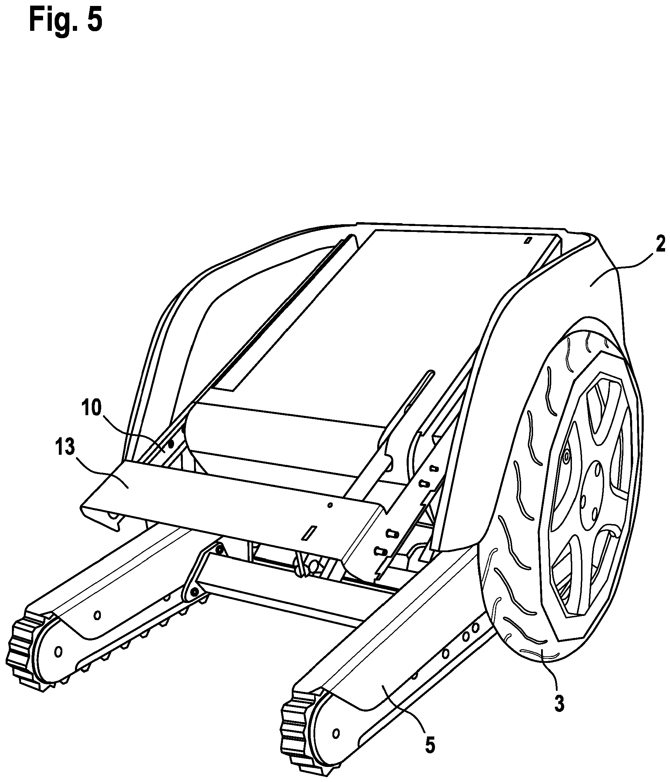

Fig. 5 zeigt den Grundkörper 2 des Rollstuhls 1 mit den Rädern 3, 4 und dem Raupenfahrwerk 5.

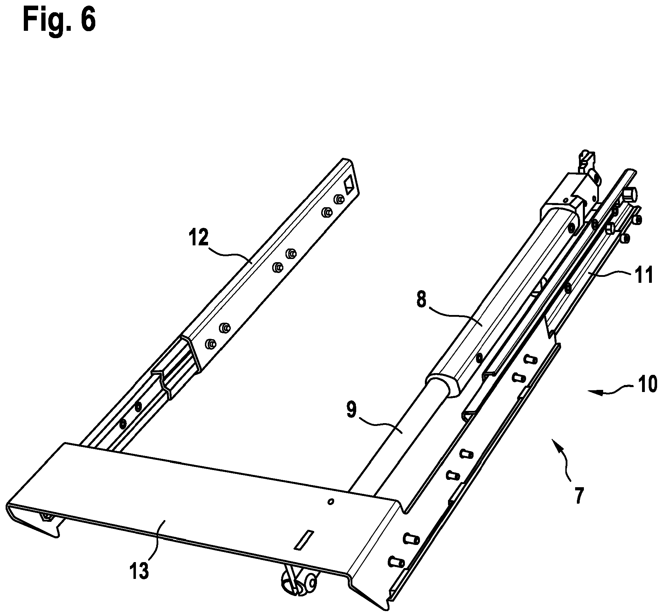

Fig. 6 zeigt die wesentlichen Komponenten des Verstellmechanismus 7. Der in Fig. 6 gezeigte Verstellmechanismus 7 umfasst einen Linearantrieb 8, der in dem dargestellten Ausführungsbeispiel als Spindeltrieb ausgebildet ist. Bei aktiviertem Linearantrieb 8 kann eine Spindel 9 linear ein- oder ausgefahren werden. Der Verstellmechanismus 7 umfasst einen Teleskopauszug 10 mit einer linken Teleskopschiene 11 und einer rechten Teleskopschiene 12. Ein feststehender Teil der beiden Teleskopschienen 11, 12 ist fest mit dem Grundkörper 2 verbunden. Ein ausziehbarer Teil der beiden Teleskopschienen 11, 12 ist mit dem in den Fig. 5 und 6 nicht gezeigten Sitz 6 verbunden. Die beiden Teleskopschienen 11, 12 sind durch eine sich in Querrichtung ersteckende Verbindungsplatte 13 miteinander verbunden. Mittels des in den Fig. 5 und 6 gezeigten Verstellmechanismus kann somit der Sitz 6 relativ zum Grundkörper 2 des Rollstuhls linear bewegt werden, um die Sitzhöhe einzustellen.

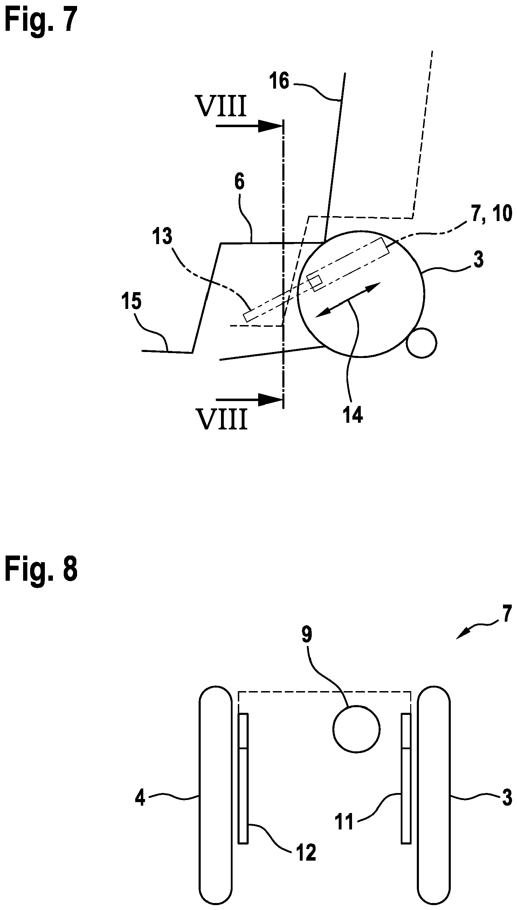

Fig. 7 ist eine Seitenansicht und zeigt schematisch die Anordnung des Verstellmechanismus 7 in dem Rollstuhl 1. Das vordere Ende des Verstellmechanismus 7 ist bezüglich der horizontalen Achse nach unten geneigt, sodass sich die Verbindungsplatte 13 in einer niedrigeren Position im Vergleich zu den feststehenden Teilen der Teleskopschienen 11, 12 befindet. Durch Aktivieren des Verstellmechanismus 7, d. h. durch Einschalten des Linearantriebs 8, wird der Sitz 6 entlang der durch den Doppelpfeil 14 angegebenen Richtung verschoben. Durch die schräge bzw. geneigte Anordnung des Linearantriebs 8 ist eine vertikale Bewegung des Sitzes 6 mit einer horizontalen Verschiebung gekoppelt. Durch den Linearantrieb 8 wird der Sitz 6 somit in zwei Achsen "diagonal" bewegt. Eine Absenkbewegung des Sitzes 6 bewirkt, dass dieser gleichzeitig nach vorne verschoben wird. Beim Anheben des Sitzes 6 wird dieser gleichzeitig nach hinten verschoben.

In Fig. 7 ist schematisch dargestellt, dass beim Verstellen des Sitzes 6 auch die damit fest verbundene Fußstütze 15 und die fest mit dem Sitz 6 verbundene Rückenlehne 16 verschoben werden. Die durchgezogene Line zeigt dabei eine Position, in der sich der Sitz 6 in einer abgesenkten Position befindet, die gestrichelte Linie zeigt eine erhöhte Position des Sitzes 6.

Fig. 8 ist eine geschnittene Ansicht und zeigt die wesentlichen Komponenten des Verstellmechanismus 7 entlang der Line VIII - VIII von Fig. 7 geschnitten. Man erkennt, dass die Teleskopschienen 11, 12 des Verstellmechanismus 7 an der Innenseite der Räder 3, 4 parallel in Längsrichtung angeordnet sind. Der Verstellmechanismus 7 kann somit platzsparend in dem Rollstuhl 1 untergebracht werden.

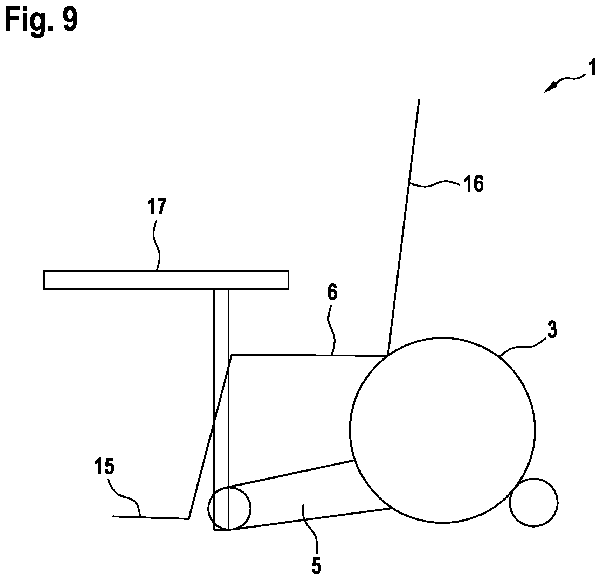

Fig. 9 zeigt den Rollstuhl 1, nachdem der Sitz 6 in eine untere Position bewegt worden ist. Die Fußstütze 15 befindet sich dabei kurz über den Boden. In dieser abgesenkten Position des Rollstuhls 1 kann der Benutzer soweit unter einen Tisch 17 fahren, bis sich seine Beine unterhalb der Tischplatte befinden. Da sich die Fußstütze 15 vor dem Rollstuhl 1 befindet, ist es nicht erforderlich, den Rollstuhl 1 weiter in Richtung des Tischs 17 zu fahren.

Der Rollstuhl 1 weist ein Bedienelement auf, das als Schalter oder als Kombination mehrerer Schalter, als Taster oder als Kombination mehrerer Taster, als Joystick oder als berührungssensitive Oberfläche oder als Kombination der erwähnten Eingabegeräte ausgebildet sein kann. Mittels des Bedienelements kann der Benutzer den Verstellmechanismus 7 bedienen.

## Patentansprüche

1. Selbstbalancierendes Fahrzeug, umfassend:
- zwei axial voneinander beabstandete, an einem Grundkörper (2) angebrachte Räder (3, 4),
- einen mit wenigstens einem Rad (3, 4) gekoppelten elektrischen Antrieb,
- eine Steuerungseinrichtung, die dazu ausgebildet ist, durch Ansteuern des Antriebs das Fahrzeug im Gleichgewicht zu halten, indem das Fahrzeug lediglich von den beiden voneinander beabstandeten Rädern (3, 4) getragen und somit balanciert wird,
- eine Aufnahme zum Tragen und Befördern einer Last,
**dadurch gekennzeichnet, dass**
das Fahrzeug einen Verstellmechanismus (7) zum linearen Verschieben der Aufnahme aufweist, der fest mit dem Grundkörper (2) verbunden und so angeordnet ist, dass die Aufnahme durch die lineare Verschiebung sowohl entlang der Längsachse als auch entlang der Hochachse des Fahrzeugs verstellbar ist, indem das vordere Ende des Verstellmechanismus (7) bezüglich der horizontalen, in Querrichtung des selbstbalancierenden Fahrzeugs verlaufenden Achse nach unten geneigt ist.

2. Fahrzeug nach Anspruch 1, wobei der Verstellmechanismus (7) einen Linearantrieb (8) aufweist.

3. Fahrzeug nach Anspruch 1 oder 2, wobei die Aufnahme mittels des Verstellmechanismus (7) stufenlos verstellbar ist.

4. Fahrzeug nach einem der vorangehenden Ansprüche, wobei der Verstellmechanismus (7) einen Teleskopauszug (10) aufweist, der einerseits an dem Grundkörper (2) und andererseits an der Aufnahme angebracht ist.

5. Fahrzeug nach Anspruch 4, wobei der Teleskopauszug (10) eine linke und eine rechte ausziehbare Teleskopschiene (11, 12) aufweist, die durch eine Verbindungsplatte (13) miteinander verbunden sind.

6. Fahrzeug nach einem der vorangehenden Ansprüche, das zum Befahren einer Treppe oder einer Rampe geeignet ist und in einer ersten, im Wesentlichen für einen ebenen Untergrund vorgesehenen Betriebsart durch die an dem Grundkörper (2) angebrachte Räder (3, 4) und in einer zweiten, zum Befahren einer Treppe oder einer Rampe vorgesehenen Betriebsart mittels eines ein Umschlingungsmittel aufweisenden Raupen- oder Kettenfahrwerks (5) antreibbar ist.

7. Fahrzeug nach einem der vorangehenden Ansprüche, wobei die Aufnahme als Sitz (6) ausgebildet ist, an dem eine mit dem Sitz (6) verstellbare Fußstütze (15) angeordnet ist.

8. Fahrzeug nach Anspruch 7, wobei der Sitz (6) soweit nach vorne verstellbar ist, dass sich die Fußstütze (15) vor einem oder dem Raupen- oder Kettenfahrwerk (5) befindet.

9. Fahrzeug nach einem der vorangehenden Ansprüche, das als Rollstuhl (1) ausgebildet ist.

## Claims

1. Self-balancing vehicle, comprising:
- two axially spaced wheels (3, 4) mounted on a main body (2),
- an electric drive coupled to at least one wheel (3, 4),
- a control device designed to keep the vehicle in balance by controlling the drive, the vehicle being supported and thus balanced solely by the two wheels (3, 4) spaced apart from one another,
- a receptacle for carrying and transporting a load,
**characterized in that**
the vehicle has an adjustment mechanism (7) for linear displacement of the receptacle, which is fixedly connected to the main body (2) and arranged such that the receptacle is adjustable by the linear displacement both along the longitudinal axis and along the vertical axis of the vehicle by inclining the front end of the adjusting mechanism (7) downwardly with respect to the horizontal axis extending in the transverse direction of the self-balancing vehicle.

2. Vehicle according to claim 1, wherein the adjustment mechanism (7) comprises a linear drive (8).

3. Vehicle according to claim 1 or 2, wherein the receptacle is continuously adjustable by means of the adjustment mechanism (7).

4. Vehicle according to any of the preceding claims, wherein the adjustment mechanism (7) comprises a telescopic extension (10) which is attached to the main body (2) on the one hand and to the receptacle on the other hand.

5. Vehicle according to claim 4, wherein the telescopic extension (10) comprises a left and a right extendable telescopic rail (11, 12) which are connected to each other by a connecting plate (13).

6. Vehicle according to any one of the preceding claims, suitable for negotiating a staircase or a ramp and drivable in a first mode of operation, intended substantially for a flat surface, by means of wheels (3, 4) mounted on the main body (2) and in a second mode of operation, intended for negotiating a staircase or a ramp, by means of a crawler-type or tracked undercarriage (5) comprising a wrapping means.

7. Vehicle according to one of the preceding claims, wherein the receptacle is designed as a seat (6) on which a footrest (15) adjustable with the seat (6) is arranged.

8. Vehicle according to claim 7, wherein the seat (6) is adjustable forward to such an extent that the footrest (15) is located in front of one or the crawler-type or tracked undercarriage (5).

9. Vehicle according to any of the preceding claims, which is designed as a wheelchair (1).

## Revendications

1. Véhicule à équilibrage automatique comprenant :
- deux roues (3, 4) espacées axialement l'une de l'autre, montées sur un corps de base (2),
- un entraînement électrique couplé à au moins une roue (3, 4),
- un dispositif de commande permettant, par actionnement de l'entraînement, de maintenir le véhicule en équilibre, le véhicule étant porté uniquement par les deux roues (3, 4) espacées l'une de l'autre et étant ainsi équilibré,
- un support pour porter et transporter une charge,
**caractérisé en ce que**
le véhicule comporte un mécanisme de réglage (7) destiné au déplacement linéaire du support, ledit mécanisme de réglage est relié de manière solidaire au corps de base (2) et disposé de telle façon que le support est réglable par le déplacement linéaire à la fois le long de l'axe longitudinal et le long de l'axe vertical du véhicule en inclinant vers le bas l'extrémité avant du mécanisme de réglage (7) par rapport à l'axe horizontal s'étendant dans le sens transversal du véhicule à équilibrage automatique.

2. Véhicule selon la revendication 1, en ce que le mécanisme de réglage (7) comporte un entraînement linéaire (8).

3. Véhicule selon la revendication 1 ou 2, en ce que le support est réglable en continu au moyen du mécanisme de réglage (7).

4. Véhicule selon l'une des revendications précédentes, en ce que le mécanisme de réglage (7) comporte une glissière télescopique (10), qui est d'une part montée sur le corps de base (2) et d'autre part sur le support.

5. Véhicule selon la revendication 4, en ce que la glissière télescopique (10) comporte un rail télescopique coulissant gauche et un rail télescopique coulissant droit (11, 12) qui sont reliés entre eux par une plaque de raccordement (13).

6. Véhicule selon l'une des revendications précédentes, qui est approprié au franchissement d'un escalier ou d'une rampe et pouvant être entraîné, dans un premier mode de fonctionnement prévu essentiellement pour un sol plat, par les roues (3, 4) montées sur le corps de base (2) et dans un deuxième mode de fonctionnement prévu pour le franchissement d'un escalier ou d'une rampe au moyen d'un train de roulement à chenilles ou à chaînes (5) comportant un moyen d'enroulement.

7. Véhicule selon l'une des revendications précédentes, en ce que le support est réalisé sous forme de siège (6), sur lequel un repose-pieds (15) réglable avec le siège (6) est disposé.

8. Véhicule selon la revendication 7, en ce que le siège (6) est réglable vers l'avant, de façon à ce que le repose-pieds (15) se trouve en amont d'un ou du train de roulement à chenilles ou à chaînes (5).

9. Véhicule selon l'une des revendications précédentes, qui se présente sous forme de fauteuil roulant (1).
